# EUROPEAN PATENT APPLICATION

(11) **EP 2 074 881 A1**
(43) Date of publication of application: **01.07.2009**
(21) Application number: 06812095.5
(22) Date of filing: 20.10.2006
(51) Int. Cl.: A01G 23/08, A01G 23/00

(54) **HARVESTER MACHINE FOR WOOD AND FELLING/WOOD MAKING METHOD**

(71) Applicant: Sumitomo (S.H.I.) Construction Machinery Manufacturing Co., Ltd., Tokyo 141-6025 (JP)
(72) Inventor: KONDO, Makoto, Chiba 263-0001 (JP); HIROHASHI, Tsutomu, Chiba 263-0001 (JP)
(74) Representative: Carstens, Dirk Wilhelm
(86) International application number: PCT/JP2006/320966
(87) International publication number: WO 2008/047450

(57) **Abstract**

A harvester apparatus (100) equipped in a work vehicle and capable of at least cutting down, pruning, and cross-cutting wood, the harvester apparatus being configured to include a gripping claw (116) that can hold the wood by opening and closing in the thickness direction of the wood, a chain saw (120) capable of cutting the wood held with the gripping claw (116), a pruner (110) for pruning the wood arranged at a different position in the lengthwise direction of the gripped wood relative to the gripping claw (116), a slide frame (105) that can change the lengthwise distance between the pruner (110) and the gripping claw (116), and a sensor (130) for detecting the slide amount of the slide frame (105).

## Description

### TECHNICAL FIELD

The present invention relates to the technical field of harvester apparatuses that are equipped in work vehicles and capable of at least cutting down, pruning, and cutting wood.

### BACKGROUND ART

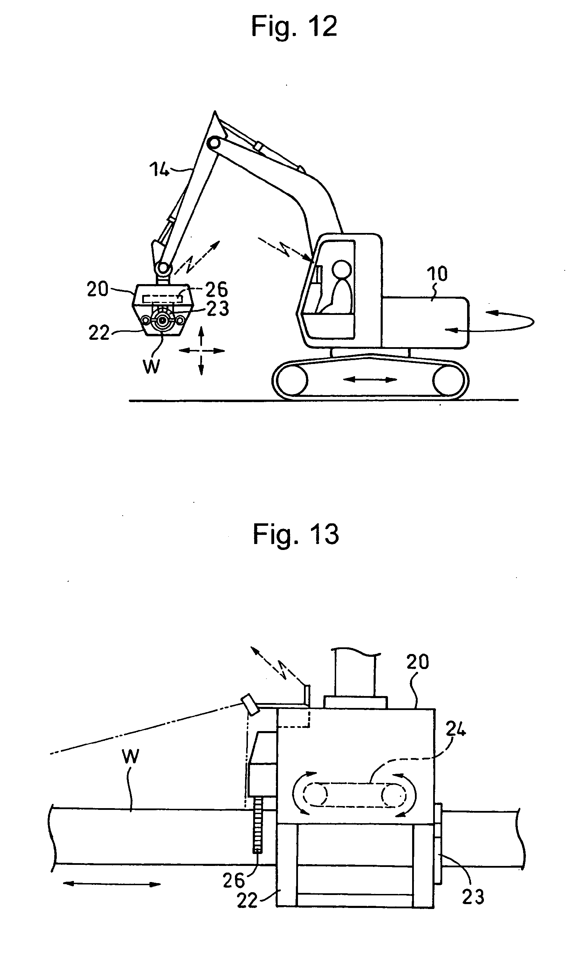

The wood processor apparatus 20 shown in Fig. 12 and Fig. 13 has been known in the past (see Japanese Patent Laid-Open Publication No. 2005-27509).

This processor apparatus 20 is attached to the distal end of a movable arm 14 of a work vehicle 10 such as a power shovel and used as shown in Fig. 12. The processor apparatus 20 includes a gripper 22 capable of holding a piece of wood W that has already been cut down, a feeder 24 for feeding the wood W held by this gripper 22 in a lengthwise direction, a cutter 26 capable of cutting the wood W at a predetermined position, and a pruner 23 for pruning off branches from the wood W. The pruning with this pruner 23 is achieved by feeding out the wood W in the lengthwise direction by the feeder 24.

With the use of such a processor apparatus 20, wood processing such as pruning, cross-cutting and the like as well as wood transportation can be achieved with only one apparatus (work vehicle), enabling these operations to be done in understaffed situations.

However, since the above-described processor apparatus 20 is not capable of cutting down trees growing on the ground (hereinafter referred to as "live trees"), it is necessary to cut down live trees first using other means such as saws or chain saws before performing the wood processing with this processor apparatus 20.

Another issue is with the feeder 24, in which the wood is fed in the lengthwise direction by, for example, driving a toothed wheel or a crawler that is in contact with the surface of the wood. An inevitable consequence of such a feeder 24 design is slippage on the wood surface. This results in more time spent for feeding the wood and reduced work efficiency. On the contrary, if the contact pressure of the toothed wheel or crawler against the wood is increased to avoid this situation, the wood will be much damaged at the contact points, which may lower its value as a wood material.

### DISCLOSURE OF THE INVENTION

It is an object of the present invention to provide a harvester apparatus capable of cutting down live trees as well as feeding the wood in the lengthwise direction swiftly and freely without the help of a toothed wheel or a crawler.

The present invention is a harvester apparatus equipped in a work vehicle and capable of at least cutting down, pruning, and cross-cutting wood, including: a gripper that can hold the wood by opening and closing in a thickness direction of the wood; a cutter capable of cutting the wood held with the gripper; a pruner for pruning the wood arranged at a different position in a lengthwise direction of the gripped wood relative to the gripper; a slide mechanism that can change a distance in a lengthwise direction between the pruner and the gripper; and a sensor for detecting a slide amount of the slide portion. This achieves the above object.

By adopting this structure, it is possible to make the gripper slide along the length of the wood relative to the pruner, with the gripper holding the wood. That is, the wood can be slid (fed) relative to the pruner. According to the present invention, the wood is not slid with a toothed wheel or a crawler in contact with the wood, and therefore there is no problem of slippage occurring at the interface with the wood, and the wood can be slid fast. Also there is no problem of severe damage to the wood. Furthermore, because the slide amount of the slide mechanism is detected by the detection sensor, the slide mechanism can be slid freely by a desired amount.

More specifically, for example, the pruner may be configured to include a stationary knife secured to the apparatus main body and a movable knife supported on the apparatus main body and capable of holding the wood by opening and closing in the thickness direction of the wood, and with the wood held at two points with this movable knife and the gripper, the slide mechanism is driven, with the grip of the gripper being adjusted at a predetermined timing, as a result of which it is made possible to slide (feed) the gripped wood fast in the lengthwise direction relative to the pruner.

The present invention can also be interpreted as a wood processing method using a harvester apparatus that is equipped in a work vehicle and capable of at least cutting down, pruning, and cross-cutting wood, characterized by having steps of opening both of a gripper and a movable knife, the gripper being capable of holding the wood by opening and closing in the thickness direction of the wood, and the movable knife being a part of a pruner arranged at a different position in the lengthwise direction of the gripped wood relative to the gripper and capable of opening and closing in the thickness direction of the wood; closing the gripper and the movable knife after enclosing the wood inside the open gripper and the movable knife; cutting the gripped wood; increasing the lengthwise distance between the gripper and the movable knife with the gripper holding the wood and with the movable knife being closed; and decreasing the lengthwise distance between the gripper and the movable knife with the grip on the wood of the gripper being reduced and with the movable knife being closed.

The "lengthwise direction" and the "thickness direction" in the description of the present invention refer to the respective directions of a piece of wood that is held by the harvester apparatus.

### BRIEF DESCRIPTION OF THE DRAWINGS

Fig. 1 is a first perspective view of one embodiment of the harvester apparatus 100 of the present invention;
Fig. 2 is a second perspective view of the harvester apparatus 100;
Fig. 3 is a bottom view of the harvester apparatus 100 (taken from the direction of arrow III in Fig. 1);
Fig. 4 is a side view of the harvester apparatus 100;
Fig. 5 is a schematic cross sectional view of the structure of the detection sensor;
Fig. 6 is a diagram illustrating a wood processing operation with the harvester apparatus 100 before the operation is started;
Fig. 7 is a diagram illustrating the harvester apparatus 100 holding a live tree;
Fig. 8 is a diagram illustrating the moment when the live tree has been cut down with the harvester apparatus 100;
Fig. 9 is a diagram illustrating the harvester apparatus 100 that has begun pruning;
Fig. 10 is a diagram illustrating the pruning operation with the harvester apparatus 100 with its slide mechanism being extended;
Fig. 11 is a diagram illustrating the pruning operation with the harvester apparatus 100 with its slide mechanism that has been extended being retracted again;
Fig. 12 is a schematic overall view of a work vehicle equipped with the processor apparatus described in Japanese Patent Laid-Open Publication No. 2005-27509; and
Fig. 13 is a side view of the processor apparatus described in Japanese Patent Laid-Open Publication No. 2005-27509.

### BEST MODE FOR CARRYING OUT THE INVENTION

One embodiment of the present invention will be hereinafter described in detail with reference to the accompanying drawings.

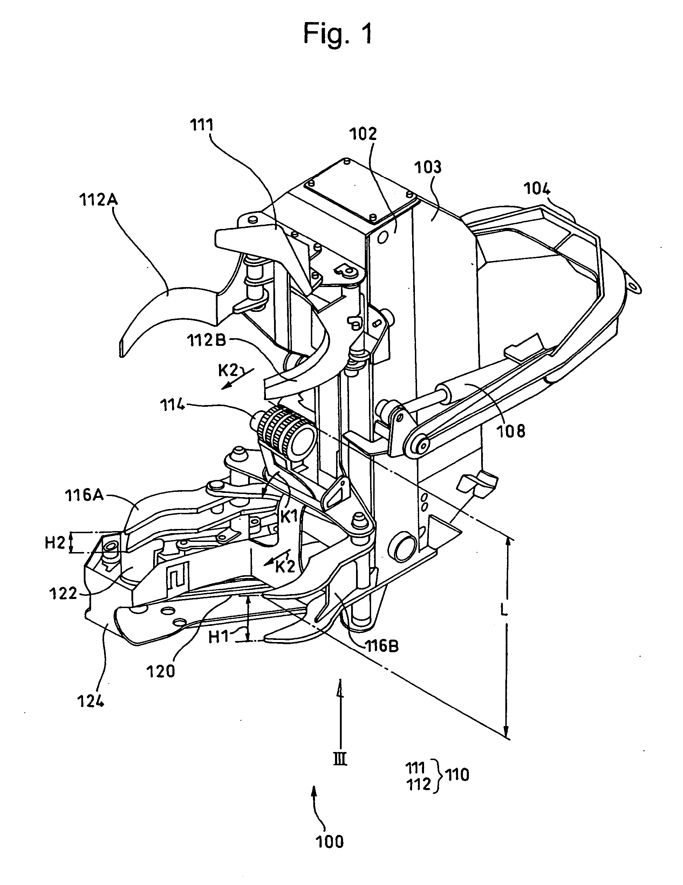

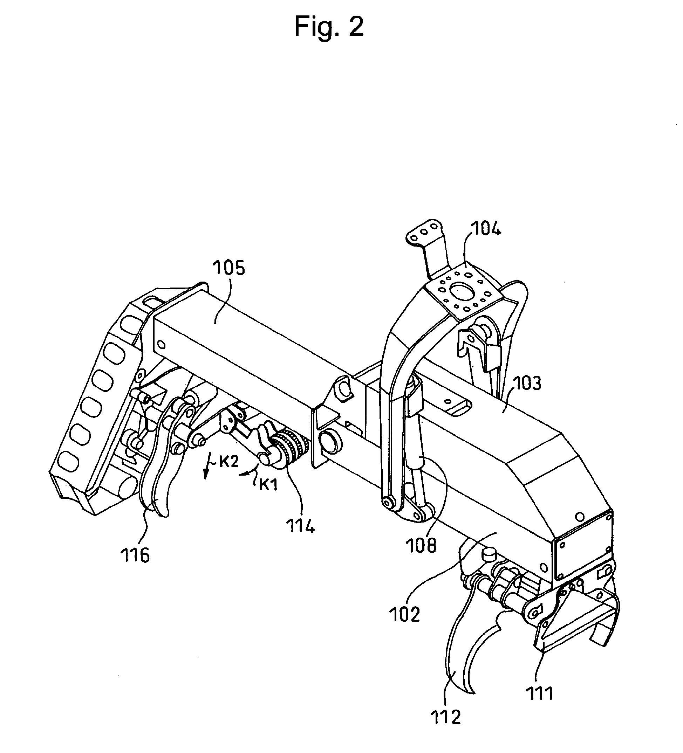

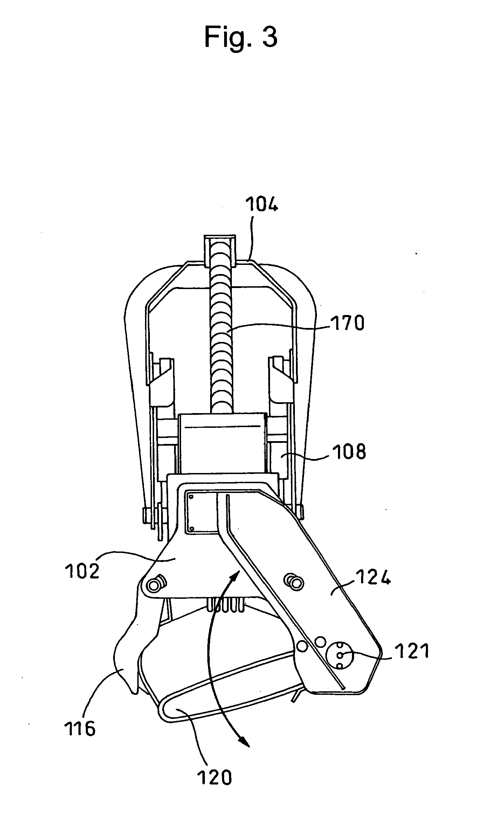

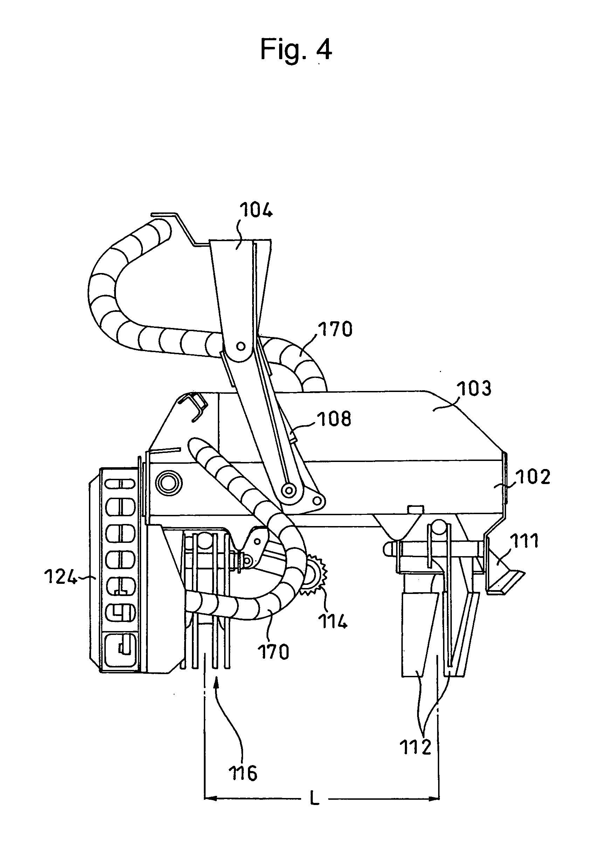

Fig. 1 is a perspective view of one embodiment of the harvester apparatus 100 of the present invention. Fig. 2 is a perspective view of the harvester apparatus 100 taken from another view. Fig. 3 is a bottom view of the harvester apparatus 100 (taken from the direction of arrow III in Fig. 1). Fig. 4 is a side view of the harvester apparatus 100. It should be noted that the wood itself is not shown in Fig. 1 through Fig. 4 for ease of description. The harvester apparatus 100 shown in Fig. 1 can, for example, hold a piece of wood with its length along the up and down direction of the drawing.

This harvester apparatus 100 is equipped in a work vehicle such as a power shovel and used, as with the example shown in the description of conventional techniques. Not to mention, the work vehicle is not limited to power shovels, and the apparatus can be applicable to various other work vehicles commonly used in construction sites such as back hoes, trucks equipped with movable arms, and so on.

The harvester apparatus 100 is configured to include a pruner 110 having a stationary knife 111 and a movable knife 112, a gripping claw (gripper) 116 that can hold the wood by opening and closing in the thickness direction of the wood, a chain saw (cutter) 120 capable of cutting the wood held with the gripping claw 116 to a desired length, and a slide mechanism (not shown in Fig. 1) that can change the distance between the pruner 110 and the gripping claw 116 (lengthwise distance L shown in Fig. 1 of the gripped wood) .

The main body 102 of the harvester apparatus 100 has a substantially rectangular shape. Fig. 1 illustrates the apparatus with its length (or the length of the wood) along the up and down direction of the figure. The main body 102 accommodates a hydraulic device or the like (not shown) for controlling various portions that will be described below. A cover 103 is attached to the main body 102 to protect this hydraulic device or the like. A linkage portion 104 is attached to a side face of the main body 102. Furthermore, an attitude control cylinder 108 is coupled to control the attitude of the main body 102 relative to the linkage portion 104. The linkage portion 104 is coupled and secured to the distal end of a movable arm of, for example, a power shovel, or the like. The pruner 110, the gripping claw (gripper) 116, and the chain saw (cutter) 120 are all arranged on the opposite side to the cover 103 of the main body 102.

The stationary knife 111 that is part of the pruner 110 is secured to one end in the lengthwise direction of the main body 102. The movable knife 112 is supported on the main body 102 and capable of opening and closing (in the thickness direction of the wood that is held by the gripping claw 116). Therefore, the movable knife 112 itself can grip the wood (only to an extent that it does not drop the wood, its gripping capability not as strong as that of the gripping claw 116 that is to be described later). Although not shown, the main body 102 contains inside a power source (such as a cylinder or the like) for driving the movable knife 112.

The movable knife 112 is made up of a first movable knife 112A and a second movable knife 112B having a shape that can conform to the contour of the wood (i.e., substantially crescent), and these first movable knife 112A and second movable knife 112B are disposed substantially in mirror image arrangement. Further, the first and second movable knives 112A and 112B are slightly offset from each other in the lengthwise direction of the wood. Accordingly, when the first and second movable knives 112A and 112B are closed, their tips do not meet but cross each other so that they can close further toward each other. In other words, even if the wood is thin, the movable knife 112, when closed, can hold (make contact with) the wood.

The gripping claw 116 is arranged at a different position from the above-described pruner 110 (stationary knife 111 and movable knife 112) in the lengthwise direction of the wood (up and down direction in Fig. 1). That is, it is disposed at the other end in the lengthwise direction of the main body 102 relative to the pruner 110. The gripping claw 116 is made up of a pair of gripping claws 116 (first gripping claw 116A and second gripping claw 116B) that can open and close in the thickness direction of the wood. Each of the first and second gripping claws 116A and 116B mainly consists of two plate-like members having a shape that can conform to the contour of the wood (i.e., substantially crescent). The distance H1 in the lengthwise direction (see Fig. 1) between the two plate-like members forming the second gripping claw 116B is designed larger than the distance H2 in the lengthwise direction (see Fig. 1) between the two plate-like members forming the first gripping claw 116A. Accordingly, when the first and second gripping claws 116A and 116B are closed, their tips do not meet but cross each other so that they can close further toward each other. In other words, even if the wood is thin, the gripping claw 116, when closed, can hold the wood, and they can hold wood of various thicknesses by changing their opening degree.

Adjacent (or below in Fig. 1) the gripping claw 116 is provided the chain saw (cutter) 120 capable of cutting the wood held by the gripping claw 116. The chain saw 120 is driven by a chain saw motor 122. The chain saw 120 is normally accommodated inside a chain saw cover 124 so that it does not get in the way of the gripped wood, but can rotate around a fulcrum 121 when cutting the wood (see Fig. 3). Although not shown, a wood diameter sensor for measuring the diameter (thickness) of the gripped wood is provided near the chain saw 120.

Roller 114 can swing in the direction of the arrow K1. This roller 114 functions as a length measuring device for measuring the length of the wood. By controlling this roller to be firmly pressed in the direction K1, it is possible to give it a function of pressing the wood gripped in the gripping claw 116 toward the direction of the arrow K2. With this feature, the gripped wood is prevented from rattling inside the claws.

Inside the main body 102 is accommodated a slide frame (slide mechanism) 105 that can slide in the lengthwise direction of the main body 102 (i.e., along the length of the gripped wood). The gripping claw 116, the chain saw 120, and the roller 114 described above are disposed on the side of this slide frame 105. Accordingly, the lengthwise distance (of the wood) between the pruner 110 and the gripping claw 116 can be freely changed by sliding the slide frame 105. Although not shown, the slide frame 105 is driven by a power source (e.g., hydraulic cylinder or the like) provided inside the main body 102 so that it can extend and retract swiftly.

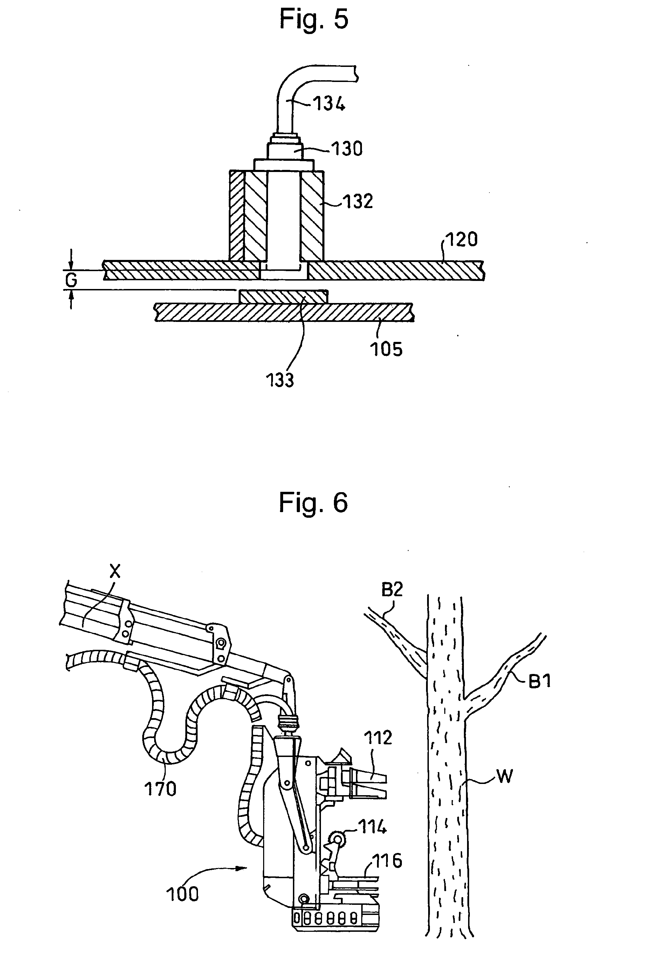

Furthermore, a sensor (detection sensor) 130 is provided in the main body 102 to detect the slide amount of the slide frame 105 relative to the main body 102 (see Fig. 5). In this embodiment, this sensor 130 is secured to the main body 102 using a seat 132. Furthermore, as shown in Fig. 5, the slide frame 105 is provided at spaced intervals with protrusions 133 in the lengthwise direction (along its length). Therefore, the slide amount of the slide frame 105 can be determined by counting the number of the protrusions 133. The detection sensor is obviously not limited to this type and various other designs can be adopted, such as the sensor that uses a photo diode, or the one that detects changes in magnetic force of a magnet embedded in the slide frame 105 using a magnetic sensor or the like to consequently determine the slide amount of the slide frame 105. The detected information can be transmitted to a control unit (not shown) through a sensor cable 134.

Reference numeral 170 shown in Fig. 3 and Fig. 4 denotes a cable required for operating this harvester apparatus 100 from the work vehicle such as a power shovel or the like.

Next, how to use this harvester apparatus 100 (method of processing wood) is described with reference to Fig. 6 to Fig. 11.

Fig. 6 illustrates a state before the wood processing operation is started, in which the harvester apparatus 100 is just about to be attached to a piece of wood (live wood) W. Using the attitude control cylinder 108, the attitude of the harvester apparatus 100 is adjusted so that the lengthwise direction of the main body 102 is along the length (up and down direction in Fig. 6) of the wood W.

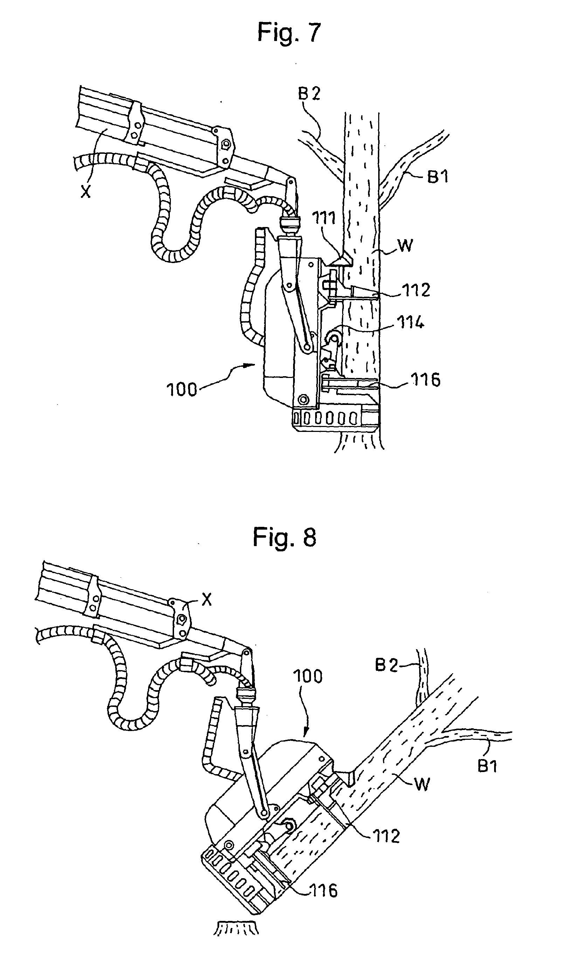

Successively, as shown in Fig. 7, with the movable knife 112 and the gripping claw 116 being open (in the widthwise direction of the wood W), the apparatus is positioned so that the wood W is enclosed inside the movable knife 112 and the gripping claw 116. The positioning is mainly achieved by the work vehicle X such as a power shovel or the like in which the harvester apparatus 100 is equipped.

Successively, the gripping claw 116 is closed. The movable knife 112 is also closed at this time to prepare to be able to hold and support the wood W after it is cut down.

Next, as shown in Fig. 8, with the wood W being held, the chain saw 120 is driven to cut the wood W. Accordingly, the wood W, after it is cut, will be held on the harvester apparatus 100, or on the work vehicle X, being gripped by the gripping claw 116 and the movable knife 112.

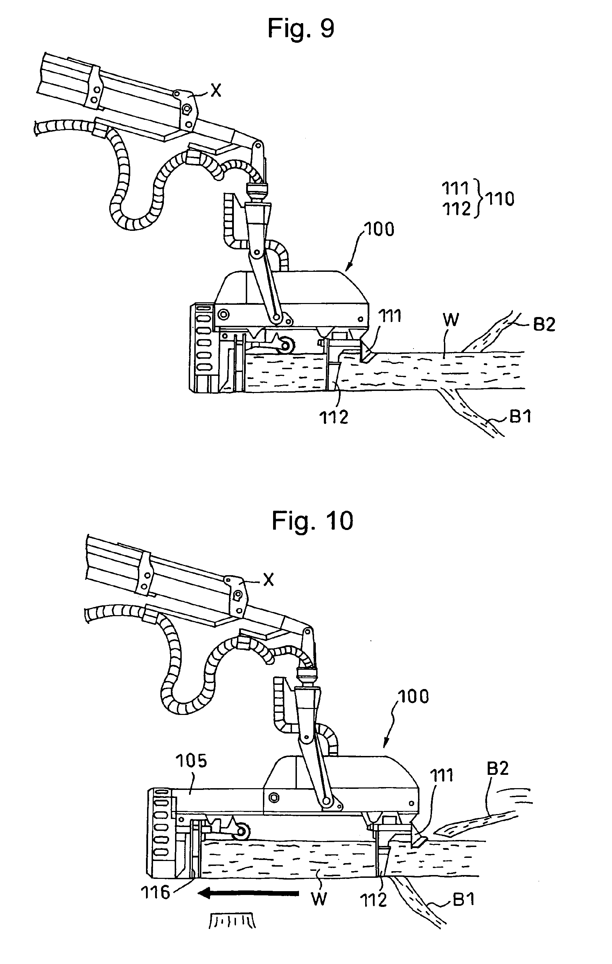

After that the wood W is laid substantially horizontally on the ground as shown in Fig. 9 to proceed to the pruning. The pruning operation involves removal of branches B (B1, B2) of the wood W with the pruner 110 (stationary knife 111 and movable knife 112).

As shown in Fig. 10, the slide frame 105 is extended while the wood W is firmly held with the gripping claw 116 (in other words, with the gripping claw 116 holding the wood W and with the movable knife 112 being closed, the lengthwise distance between the gripping claw 116 and the movable knife 112 is increased) so as to slide the wood W in the lengthwise direction (direction of the arrow in Fig. 10). Accordingly, the wood W slides relative to the pruner 110 (stationary knife 111 and movable knife 112) so that the branches B are chipped off. Here, the wood W may not have a uniform thickness, but by providing a sensor capable of detecting the thickness of the wood (e.g., an image sensor using a CCD camera or the like, or a sensor that detects reaction force from the wood W acting on the movable knife 112 or the roller 114) and by using the information fed back from the sensor, the grip of the movable knife 112 may be suitably adjusted.

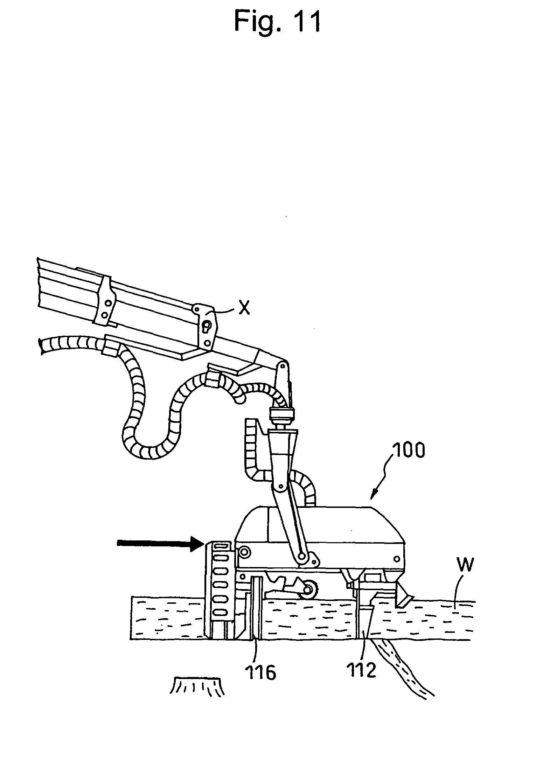

Successively, as shown in Fig. 11, the gripping claw 116 is loosened and the slide frame 105 is retracted (in other words, with the gripping claw 116 holding the wood W and with the movable knife 112 being closed, the lengthwise distance between the gripping claw 116 and the movable knife 112 is decreased) so as to move only the lengthwise position of the gripping claw 116 closer toward the pruner 110 while the position of the wood W relative to the harvester apparatus 100 remains the same. After that, the series of actions (shown in Fig. 10 and Fig. 11) are repeated to prune off the branches of the wood W as required.

As the slide amount (movement amount) of the slide frame 105 is detected by the sensor (detection sensor) as described above, the operator can slide the wood W to a desired position. For example, if the wood includes many warps, the amount of each sliding movement is made small so that the wood can be slid smoothly. On the other hand, if the wood does not have many warps, the slide amount is increased to speed up the operation.

As one alternative, the wood W may be cut at a predetermined position using the chain saw 120 during this pruning operation. In this embodiment, the roller (length measuring device) 114 is used for determining the length of the wood W to which it should be cut with the chain saw 120. Thereby, the wood can be cut (cross-cut) to a desired length (that is determined using the roller 114). Here, the diameter (thickness) of the wood is measured with the wood diameter sensor (not shown) so that the chain saw 120 does not rotate more than necessary.

With this harvester apparatus 100, as described above, the wood is not slid with a toothed wheel or a crawler in contact with the wood, and therefore there is no problem of slippage occurring at the interface with the wood, and the wood can be slid fast. Moreover, the cutting down, pruning, cross-cutting, and transportation of wood can all be achieved by this single harvester apparatus 100 (work vehicle X), whereby labor cost can largely be cut down, and fairly efficient operation is made possible.

It should be noted that with this harvester apparatus 100, data such as workload during a certain period (e.g., a day, a week, or a month) can readily be obtained by compiling data from the sensor 130 that detects the slide amount of the slide frame 105, the roller 114 that functions as a length measuring device, and the wood diameter sensor (not shown) that measures the diameter (thickness) of the wood.

Also, if necessary, the slide amount (amount of relative movement) of the wood can be determined more precisely based on the data obtained from the sensor 130 that detects the slide amount of the slide frame 105, as well as the data obtained from the roller 114 that functions as a length measuring device. That is, since the slide amount of the slide frame 105 (integrated value of slide amount in one direction) actually represents the slide amount of the gripped wood, a more precise slide amount (amount of relative movement) of the wood can be obtained by checking up data from both of the sensor 130 and the roller 114 and by, for example, adopting an intermediate value.

### INDUSTRIAL APPLICABILITY

The use of the present invention enables a single apparatus (work vehicle) to carry out cutting down, pruning, cross-cutting, and transportation of wood. Also, it enables the wood to be slid (moved relative to the apparatus) in the lengthwise direction swiftly and freely by a desired length, which enhances work efficiency.

## Claims

1. A harvester apparatus equipped in a work vehicle and capable of at least cutting down, pruning, and cross-cutting wood, the apparatus comprising:
a gripper that can hold the wood by opening and closing in a thickness direction of the wood;
a cutter capable of cutting the wood held with the gripper;
a pruner for pruning the wood, the pruner being arranged at a different position in a lengthwise direction of the gripped wood relative to the gripper;
a slide mechanism that can change a distance in a lengthwise direction between the pruner and the gripper; and
a detection sensor for detecting a slide amount of the slide mechanism.

2. The harvester apparatus according to claim 1, wherein
the pruner is configured to include a stationary knife secured to the apparatus main body and a movable knife supported on the apparatus main body and capable of holding the wood by opening and closing in the thickness direction of the wood.

3. A wood processing method using a harvester apparatus that is equipped in a work vehicle and capable of at least cutting down, pruning, and cross-cutting wood, the method comprising the steps of:
opening both of a gripper and a movable knife, the gripper being capable of holding the wood by opening and closing in a thickness direction of the wood, and the movable knife being a part of a pruner arranged at a different position in a lengthwise direction of the gripped wood relative to the gripper and capable of opening and closing in the thickness direction of the wood;
closing the gripper and the movable knife after enclosing the wood inside the open gripper and the movable knife;
cutting the gripped wood;
increasing a lengthwise distance between the gripper and the movable knife with the gripper holding the wood and with the movable knife being closed; and
decreasing the lengthwise distance between the gripper and the movable knife with the grip on the wood of the gripper being reduced and with the movable knife being closed.

4. The wood processing method using a harvester apparatus according to claim 3, wherein,
in the step of increasing the lengthwise distance and in the step of decreasing the lengthwise distance, either the lengthwise distance or an amount of relative movement between the gripper and the movable knife is detected by a sensor.
